# EUROPEAN PATENT APPLICATION

(11) **EP 4 578 798 A1**
(43) Date of publication of application: **02.07.2025**
(21) Application number: 24163668.7
(22) Date of filing: 14.03.2024
(51) Int. Cl.: B65G 1/04

(54) **STORAGE LOGISTICS SYSTEM**

(30) Priority: 28.12.2023 CN 202311836787
(71) Applicant: Beijing Jingdong Qianshi Technology Co., Ltd., Beijing 100176 (CN)
(72) Inventor: ZHANG, Lei, BEIJING, 100176 (CN); WANG, Zhe, BEIJING, 100176 (CN)
(74) Representative: Page White Farrer

(57) **Abstract**

A storage logistics system, comprising: a shelf (100), comprising a horizontal beam and a vertical beam and provided with multiple rows of storage positions for placing articles; a articles access mechanism (200), movably arranged relative to the shelf (100) to take articles from a specified storage position and place the articles to a specified storage position; and a transfer vehicle (300), configured to transport articles on the site of the storage logistics system, and the operation efficiency of the whole storage logistics system is improved.

## Description

### Field of the Invention

The present disclosure relates to the field of logistics, and in particular to a storage logistics system.

### Background of the Invention

In a storage logistics system, a articles ex-warehousing and warehousing system is an important technology to improve the storage production efficiency and reduce the logistics cost. An existing storage logistics system includes a shelf-to-person system and a shuttle stereoscopic storage system. In the ex-warehousing and warehousing process of the shelf-to-person system, it is necessary to move the whole shelf in and out, which is time-consuming and laborious. The shuttle stereoscopic storage system can ex-warehouse and warehouse articles, but the cost is high and the height usually reaches 15-20 meters, thereby having a high requirement on sites. Some container ex-warehousing and warehousing systems easy to enter and with low cost have appeared in recent years, but are not mature. The whole efficiency of the storage logistics system is low, and the requirement cannot be met.

### Summary of the Invention

To improve the above technical defects, the present disclosure provides a storage logistics system, including: a shelf, including a horizontal beam and a vertical beam and provided with multiple rows of storage positions for placing articles; a articles access mechanism, movably arranged relative to the shelf to take articles from a specified storage position and place the articles to a specified storage position; and a transfer vehicle, configured to transport articles on the site of the storage logistics system.

In some embodiments, the articles access mechanism is movably arranged relative to the shelf in a bottom hanging manner.

In some embodiments, the articles access mechanism is mounted on the shelf.

In some embodiments, the storage logistics system includes a articles temporary storage mechanism provided with a temporary storage position, the temporary storage position is configured to temporarily store articles from the transfer vehicle and the articles access mechanism, the articles temporary storage mechanism is arranged below a storage position located at the lowest row and higher than the transfer vehicle in a articles loading state, a low-level channel is formed between the articles temporary storage mechanism and the ground of the storage logistics system, and the low-level channel is higher than the transfer vehicle in a articles transportation state, so that the transfer vehicle carrying the articles can pass under the articles temporary storage mechanism.

In some embodiments, the articles access mechanism is configured to: when the articles access mechanism is docked with a specified position located below the lowest storage position of the shelf, the minimum height of the bottom of the articles access mechanism is greater than the transfer vehicle in a no-load state, so that the transfer vehicle in the no-load state can pass under the articles access mechanism.

In some embodiments, the articles access mechanism includes a vertical track, and the vertical track can move in a horizontal direction relative to the shelf, where a bottom end of the vertical track is higher than the transfer vehicle in a articles loading state, so that the transfer vehicle in the articles loading state can pass under the bottom end of the vertical track.

In some embodiments, the vertical track is vertically arranged on one side of the shelf; and the articles access mechanism includes a fork mechanism, and the fork mechanism is movably arranged on the vertical track in a vertical direction so as to move to a specified storage position to take and place articles.

In some embodiments, the bottom of the fork mechanism is configured to: when the fork mechanism moves downwards to a docking position along the vertical track, the minimum height from the bottom of the fork mechanism to the ground is greater than the transfer vehicle in a no-load state, where the docking position is a position when the fork mechanism is docked with the specified position below the lowest storage position of the shelf.

In some embodiments, the bottom of the fork mechanism is configured to be located at the lowest position of the bottom of the articles access mechanism when the fork mechanism moves to the bottom end of the vertical track.

In some embodiments, the fork mechanism includes a bracket located at the bottom, the bracket includes a bending part, the bending part includes a vertical part and a horizontal part which are connected, the vertical part is movably connected to the vertical track, and the horizontal part is lower than the vertical part.

In some embodiments, the articles access mechanism includes a traveling mechanism for driving the vertical track to move horizontally.

In some embodiments, the traveling mechanism drives the vertical track to horizontally move along the horizontal beam and/or the fork mechanism to move along the vertical track.

In some embodiments, the traveling mechanism includes: a sliding contact line, locally arranged in a groove of the horizontal beam; and a motor, capable of being electrically connected to the sliding contact line through a current collector.

In some embodiments, the traveling mechanism includes a driving wheel connected to the vertical track, and the driving wheel is arranged on a top surface of the horizontal beam and connected to a motor in a driving manner.

In some embodiments, the traveling mechanism includes a battery electrically connected to a sliding contact line.

In some embodiments, the storage logistics system includes a guide wheel connected to the vertical track, the guide wheel is arranged on at least one side surface of the horizontal beam, and the side surface intersects a top surface of the horizontal beam.

In some embodiments, the storage logistics system includes a articles temporary storage mechanism provided with a temporary storage position, the temporary storage position is configured to temporarily store articles from the transfer vehicle and the articles access mechanism, and the articles temporary storage mechanism is arranged below a storage position located at the lowest row.

In some embodiments, the articles temporary storage mechanism includes a plurality of supporting pieces arranged at intervals in a horizontal direction, the temporary storage position includes two adjacent supporting pieces, the two adjacent supporting pieces form the temporary storage position, and the two supporting pieces are configured as one of the following:
one end of each of the two supporting pieces is connected mutually to form a closed port; the other ends of the two supporting pieces are free to form an open port; and
the two ends of the two supporting pieces are free, and open ports are formed at the two ends.

In some embodiments, the two supporting pieces are configured as one of the following:
one end of each of the two supporting pieces is connected to a supporting beam, the supporting beam is fixed on the shelf, the other ends of the two supporting pieces are free to form a single-opening channel between the two supporting pieces; and
the two supporting pieces are connected to the lowest layer of storage position of the shelf in a suspended manner between two ends or are connected to the ground of the storage logistics system in a supported manner between two ends. The two ends of the two supporting pieces are free to form a double-opening channel between the two supporting pieces.

In some embodiments, the storage logistics system includes at least two rows of spaced shelves, a laneway is formed between two adjacent rows of shelves, the articles access mechanism moves in the laneway, a laneway channel is formed between the bottom of the articles access mechanism and the ground of the storage logistics system, and the minimum height of the laneway channel is greater than the transfer vehicle in a no-load state.

In some embodiments, the transfer vehicle has a articles lifting function, a high-level channel is formed between the lowest row of storage position and the ground of the storage logistics system, and the high-level channel is higher than the transfer vehicle in a articles lifting state.

In some embodiments, the fork mechanism includes an access assembly for transferring articles between one of the storage position and the temporary storage position and the fork mechanism, and the fork mechanism is configured to make a transmission surface of the access assembly basically flush with each storage position and the temporary storage position.

In some embodiments, a top end of the vertical track is higher than the highest layer of storage position.

In some embodiments, a bottom end of the vertical track is higher than the temporary storage position.

In some embodiments, a specified position is a position where the temporary storage position below the shelf is located, and the fork mechanism is docked with the temporary storage position at the docking position for transferring articles.

The present disclosure provides a storage logistics system, which can efficiently ex-warehouse and warehouse articles and has at least one of the following technical advantages:
the articles access mechanism is mounted on one side of the shelf, is high and stable in operation speed and is convenient to mount, so that the entering and landing speed of the whole system is higher.

The low-level channel below the articles temporary storage mechanism is higher than the transfer vehicle in the articles loading state, the transfer vehicle in the articles loading state is allowed to drive and pass under the articles temporary storage mechanism, and the fork mechanism is adjusted to be higher than the transfer vehicle in the articles loading state, so that the transfer vehicle in the articles loading state can travel in basic whole ground range of the storage logistics system without any obstacle, thereby improving the operation efficiency of the whole storage logistics system.

The laneway is formed below the articles access mechanism in the laneway, and the minimum height of the laneway channel is greater than the transfer vehicle in the no-load state, so that the transfer vehicle in the no-load state can travel in the basic whole ground range of the storage logistics system without any obstacle at any time, thereby improving the operation efficiency of the whole storage logistics system.

The accompanying drawings, which form part of the description, illustrate embodiments of the present disclosure and together with the description, serve to explain the principles of the present disclosure.

The present disclosure can be more clearly understood from the following detailed descriptions with reference to the accompanying drawings.

### Brief Description of the Drawings

FIG. 1 is an overall schematic diagram of a storage logistics system embodiment according to the present disclosure;
FIG. 2 is a schematic diagram of a articles access mechanism arranged on a shelf of a storage logistics system embodiment according to the present disclosure;
FIG. 3 is a schematic diagram of a transfer vehicle in three states in a shelf of a storage logistics system embodiment according to the present disclosure;
FIG. 4 is a three-dimensional diagram of a articles access apparatus on a shelf of a storage logistics system embodiment according to the present disclosure;
FIG. 5 is a structural schematic diagram of a articles access apparatus embodiment according to the present disclosure;
FIG. 6 is a structural schematic diagram of a first embodiment of articles temporary storage mechanism according to the present disclosure;
FIG. 7a to FIG. 7c are schematic diagrams of working states of a transfer vehicle according to the present disclosure;
FIG. 8a and FIG. 8b are structural schematic diagrams of a second embodiment and a third embodiment of a articles temporary storage mechanism according to the present disclosure;
FIG. 9 is a schematic diagram of a articles access mechanism embodiment according to the present disclosure seen from the bottom;
FIG. 10 is a structural schematic diagram of a sliding contact line arranged in a groove of a horizontal beam of a articles access mechanism according to the present disclosure seen from the bottom; and
FIG. 11 is a structural schematic diagram of a vertical track and a horizontal beam in a articles access mechanism according to the present disclosure.

### Detailed Description of the Embodiments

Various exemplary embodiments of the present disclosure will now be described in detail with reference to the accompanying drawings. The descriptions of the exemplary embodiments are merely illustrative and are in no way intended to limit the present disclosure, and application or uses thereof. The present disclosure can be implemented in many different forms and is not limited to the embodiments described herein. These embodiments are provided, so that the present disclosure will be thorough and complete, and will fully convey the scope of the present disclosure to those skilled in the art. It should be noted that unless otherwise specified, the relative arrangement of components and steps, the composition of materials, numerical expressions and numerical values set forth in these embodiments should be interpreted as merely illustrative and not as limitative.

Similar words of "first", "second" and the like used in the present disclosure do not indicate any order, quantity or importance, but are only used to distinguish different parts. Similar words such as "including" or "containing" mean that the elements before the word cover the elements listed after the word, without excluding the possibility of covering other elements. "Upper", "lower", "left", "right" and the like are only used to indicate a relative positional relationship. After the absolute position of a described object changes, the relative positional relationship may also change accordingly.

In the present disclosure, when it is described that a specific device is located between a first device and a second device, there may be an intervening device between the specific device and the first device or the second device or not. When it is described that the specific device is connected to other devices, the specific device may be directly connected to the other devices without the intervening device, and may also have the intervening device without being directly connected to the other devices.

All terms (including technical terms or scientific terms) used in the present disclosure have the same meanings as those understood by ordinary skilled in the art to which the present disclosure belongs, unless otherwise defined particularly. It should also be understood that the terms defined in, for example, general dictionaries should be interpreted as having the meanings consistent with their meanings in the context of the related art, and should not be interpreted in an idealized or extremely formal sense unless explicitly defined herein.

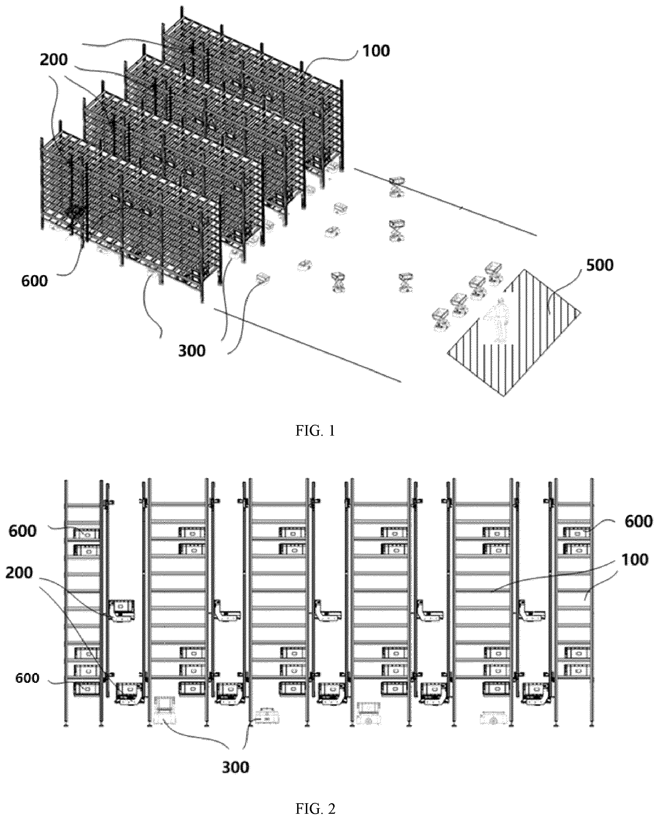

As shown in FIG. 1, embodiments of the present disclosure provide a storage logistics system, including a shelf 100, a articles access mechanism 200 and a transfer vehicle 300. The shelf 100 is provided with multiple rows of storage positions for placing articles. The articles access mechanism 200 is movably arranged relative to the shelf, may move to a specified storage position of the shelf 100 to take articles 600 thereon and convey the articles to a temporary storage position or the transfer vehicle, or may convey the articles to a specified storage position of the shelf 100 and place the articles thereon. The transfer vehicle 300 is configured to travel on a site of the storage logistics system to convey the articles, and may be configured to convey the articles to the temporary storage position or the articles access mechanism 200 through a QR code, a magnetic stripe, RFID or SLAM navigation. The articles 600 in the present application refers to an integral unit that can be transported or carried, and may be a work bin with articles, an empty work bin or the original packaged articles stored separately.

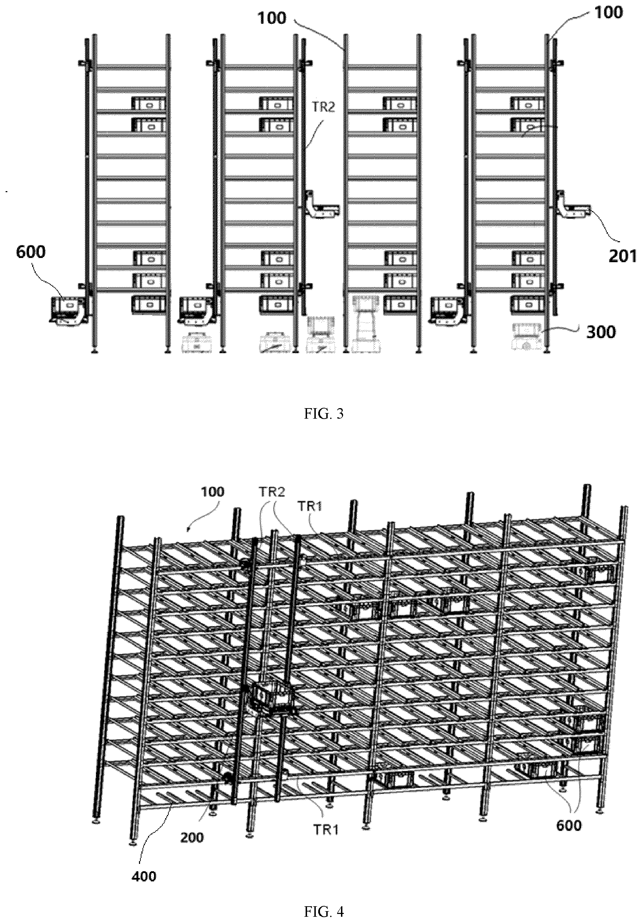

In some embodiments, as shown in FIG. 2 and FIG. 3, the shelf 100 includes a vertical beam and a horizontal beam, and may be arranged in a single layer or a plurality of layers. Each layer of the shelf 100 may be provided with one or more storage positions for storing articles 600, for storing articles. Each layer of the plurality of storage positions may be separated from each other, and may communicate with each other.

In some embodiments, as shown in FIG. 2 and FIG. 3, the storage logistics system further includes a articles temporary storage mechanism 400, the articles temporary storage mechanism 400 may be arranged below the lowest layer of storage position of the shelf 100 and is provided with a temporary storage position, the temporary storage position is configured to temporarily store the articles 600 from the transfer vehicle 300 and the articles access mechanism 200, a low-level channel is formed below the articles temporary storage mechanism 400, that is, the low-level channel is located between the articles temporary storage mechanism 400 and the ground of the storage logistics system, the height of the low-level channel is greater than the height of the transfer vehicle 300 in a articles loading state, and the transfer vehicle 300 in the articles loading state means that the transfer vehicle carries the articles 600 but does not lift the articles 600. A high-level channel is formed below the lowest layer of storage position and adjacent to the low-level channel, the high-level channel is located between the lowest layer of storage position and the ground of the storage logistics system, the height of the high-level channel is greater than the height of the transfer vehicle 300 in a articles lifting state, and the transfer vehicle 300 in the articles lifting state means that the transfer vehicle lifts the articles.

In some embodiments, as shown in FIG. 2 and FIG. 3, the articles access mechanism 200 is arranged in a laneway formed between two adjacent shelves 100 in a suspended manner, the articles access mechanism 200 can travel in the laneway, a laneway channel is formed below the bottom of the articles access mechanism 200, the laneway channel is located between the bottom of the articles access mechanism 200 and the ground of the storage logistics system, the minimum height of the laneway channel is greater than the height of the transfer vehicle 300 in a no-load state, and the transfer vehicle 300 in the no-load state means that the transfer vehicle 300 is not loaded with the articles 600 and is not lifted, so that the transfer vehicle 300 in the no-load state can travel on the whole ground of the laneway without being blocked by the articles temporary storage mechanism 400. Therefore, the articles temporary storage mechanism 400 and the transfer vehicle 300 in the no-load state may travel in the laneway at the same time without interfering with each other, thereby improving the operation efficiency.

The laneway channel should be understood as a space formed between the articles access mechanism 200 and the ground, that is, including a space along a laneway extending direction and a space perpendicular to the laneway direction, that is, the transfer vehicle 300 may be considered as passing through the laneway channel when driving along the laneway extending direction, and the transfer vehicle 300 may also be considered as passing through the laneway channel when crossing the laneway perpendicular to the laneway extending direction.

In some embodiments, it should be noted that the minimum height of the laneway channel should be understood as a minimum height on hardware or a controllable minimum height in a normal operation state.

The article access mechanism may move relative to the shelf 100, for example, move to a position adjacent to the shelf 100 so as to take the articles 600 from the temporary storage position or from the transfer vehicle 300 running on the ground of the site, then convey the articles to a specified storage position on the shelf and place the articles thereon, or convey the articles 600 taken from the specified storage position of the shelf 100 to the temporary position or the transfer vehicle 300 running on the site; and the transfer vehicle 300 may convey the transported articles 600 to the temporary storage position or take down the temporary storage position of the shelf 100 and transport the temporary storage position away. Optionally, the articles access mechanism 200 may be arranged on one shelf 100, or may be arranged on other structures except the shelf 100, for example, the articles access mechanism 200 is arranged on a supporting frame connected to a suspended ceiling or the ground of the storage logistics system, as long as the articles access mechanism 200 can move relative to the shelf 100 to take and place articles from each storage position of the shelf 100.

In some embodiments, as shown in FIG. 3, since the low-level channel and the high-level channel are higher than the transfer vehicle 300 in the no-load state, so the transfer vehicle 300 in the no-load state may travel on the ground of the basic whole site of the storage logistics system at any time without being blocked.

In some embodiments, as shown in FIG. 2 and FIG. 3, the storage logistics system may include a single shelf 100 or a plurality of shelves 100 shown in FIG. 2. The plurality of shelves 100 may be arranged at intervals, and an operation space of the articles access mechanism is formed between the adjacent shelves 100. one or more articles access mechanisms 200 may be arranged between the adjacent shelves 100. The plurality of articles access mechanisms may be arranged on one shelf of the adjacent shelves 100, or may be arranged on the adjacent shelves 100.

In some embodiments, as shown in FIG. 2, the shelf includes a single-row shelf and a double-row shelf, the single-row shelf has two storage positions in parallel along a direction perpendicular to the laneway, and the single-row shelf has an individual storage position along the direction. In a shelf area formed by the shelves arranged at intervals, one or more of the single-row shelf and the double-row shelf may be arranged at intervals to form the shelf area, as shown in FIG. 3, two ends of the shelf area are the single-row shelves, and the double-row shelf is between the single-row shelves at the two ends.

In some embodiments, in the shelves which are arranged at intervals to form the shelf area, the articles temporary storage mechanism 400 may be arranged below some shelves to only form a low-level channel without a high-level channel, no articles temporary storage mechanism 400 is arranged below some shelves, only a high-level channel is provided, or a low-level channel and a high-level channel are provided.

In some embodiments, the temporary storage mechanism 400 includes a plurality of supporting pieces 82 arranged at intervals, and articles 600 may be placed on the storage positions formed on the two adjacent supporting pieces.

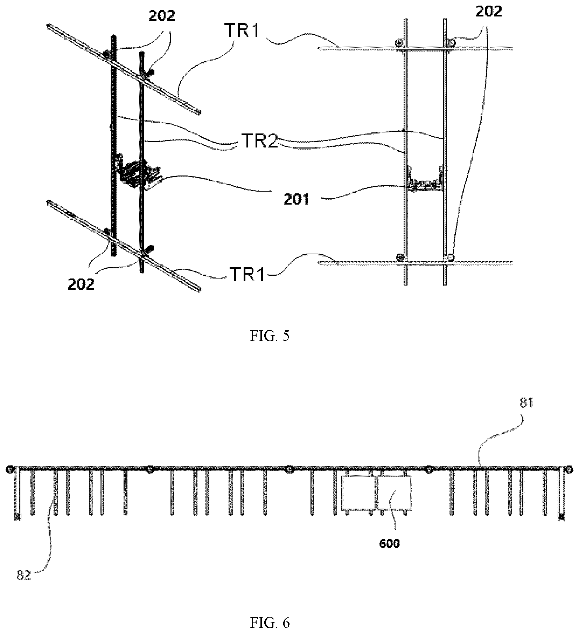

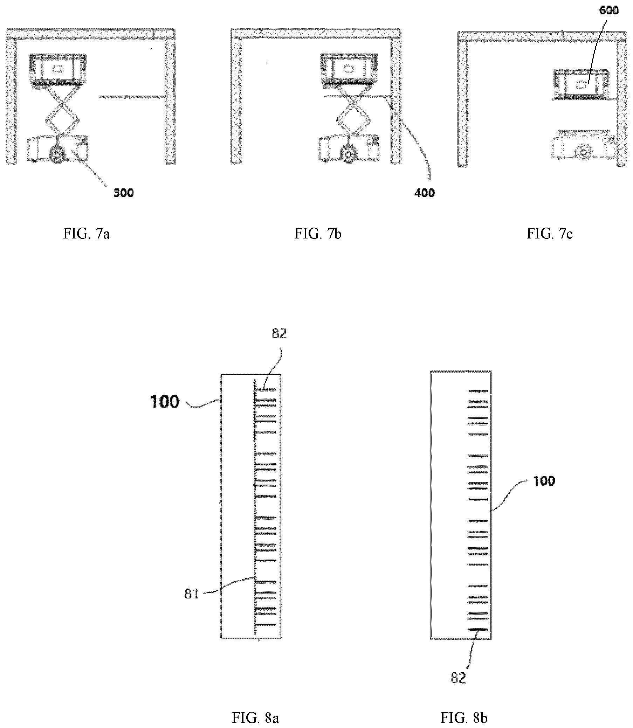

In some embodiments, as shown in FIG. 4 and FIG. 6, first ends of a plurality of supporting pieces 82 are connected to a supporting beam 81, second ends of the plurality of supporting pieces 82 are free ends, a one-way channel is formed between the two adjacent supporting pieces 82, the supporting beam 81 is connected to a vertical beam of the shelf 100, and the first ends of the plurality of supporting pieces 82 are adjacent to the laneway. As shown in FIG. 7a to FIG. 7c, the transfer vehicle 300 moves to the high-level channel and lifts the articles 600, and places the articles 600 through openings of the second ends on the temporary storage position formed by the two supporting pieces 82.

In some embodiments, as shown in FIG. 8a, first ends of a plurality of supporting pieces 82 are connected to a supporting beam 81, second ends of the plurality of supporting pieces 82 are free ends, and a one-way channel is formed between the two adjacent supporting pieces 82. The second ends of the plurality of supporting pieces 82 are adjacent to the laneway. The transfer vehicle 300 may move to the laneway and lift the articles, and place the articles on the two supporting pieces 82 through openings of the second ends of the supporting pieces 82.

In some embodiments, as shown in FIG. 8b, a plurality of supporting pieces 82 are hoisted on the lowest layer of storage position of the shelf in a suspended manner between two ends or are mounted on the ground of a site in a supported manner between two ends, so the two ends of the plurality of supporting pieces 82 are free ends, and a double-way channel is formed between the two adjacent supporting pieces 82, Therefore, the transfer vehicle 300 can move to any one of the high-level channel and the laneway and lift the articles, and place the articles 600 on at least two supporting pieces 82 through one of two openings at two ends of the two supporting pieces 82.

In some embodiments, as shown in FIG. 4 and FIG. 5, the articles access mechanism 200 includes a fork mechanism 201, the articles access mechanism may be arranged on the shelf 100 or may be arranged on other apparatuses except the shelf 100, for example, mounted on a supporting structure connected to a ceiling, a side wall or a floor of the storage logistics system, as long as the articles access mechanism can move relative to the shelf 100 and take and place the articles from the specified storage position thereon.

In some embodiments, as shown in FIG. 3 to FIG. 5, the articles access mechanism 200 may include first tracks TR1 extending horizontally and second tracks TR2 extending vertically. Two first tracks TR1 are arranged at intervals in the vertical direction. The first tracks TR1 may be mounted on a frame of the shelf 100, or may be formed by a horizontal beam of the shelf 100. Optionally, when the number of the second tracks TR2 is two, the two second tracks TR2 are arranged at intervals in a transverse direction, and the fork mechanism 201 may have end parts movably connected to the two tracks TR2 respectively and is located on one side of an operation plane formed by the two second tracks TR2 away from the shelf 100. Furthermore, the fork mechanism 201 may be located between the two second tracks TR2, so that the articles 600 can pass through a gap between the two second tracks TR2.

In some embodiments, as shown in FIG. 3 to FIG. 5, bottom ends of the second tracks TR2 extending vertically are higher than the transfer vehicle in the articles loading state, so that the transfer vehicle in the articles loading state is not blocked by the bottom ends of the second tracks TR2; furthermore, under the condition of adjusting the bottom of the fork mechanism 201 to be higher than the transfer vehicle in the articles loading state, the transfer vehicle in the articles loading state can travel on the whole ground of the storage logistics system without being blocked.

In some embodiments, as shown in FIG. 4 and FIG. 5, the articles access mechanism 200 may include first tracks TR1 extending horizontally and second tracks TR2 extending vertically. Two first tracks TR1 are arranged at intervals in the vertical direction. The first tracks TR1 may be mounted on a frame of the shelf 100, or may be formed by a horizontal beam of the shelf 100. When the number of the second tracks TR2 is two, the two second tracks TR2 are arranged at intervals in a transverse direction, and the fork mechanism 201 may have end parts movably connected to the two tracks TR2 respectively and is located on one side of an operation plane formed by the two second tracks TR2 away from the shelf 100. Furthermore, the fork mechanism 201 may be located between the two second tracks TR2, so that the articles 600 can pass through a gap between the two second tracks TR2.

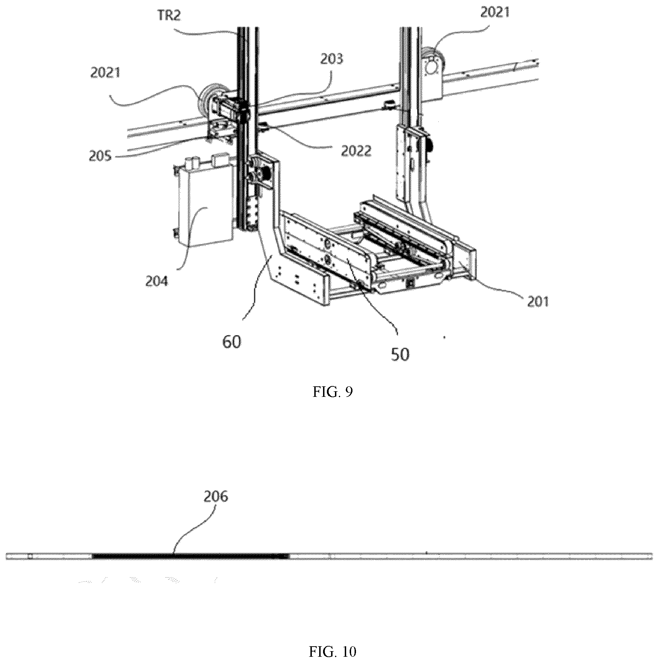

In some embodiments, as shown in FIG. 9, the fork mechanism 201 is mounted between two vertical tracks TR2, and can move vertically along the two vertical tracks TR2. The articles access mechanism 200 includes a traveling mechanism 202, and the traveling mechanism 202 is configured to drive the two vertical tracks TR2 to move horizontally. Optionally, each of upper parts and lower parts of the two vertical tracks TR2 is provided with one traveling mechanism 202.

In some embodiments, as shown in FIG. 4, when the fork mechanism 201 descends to a lower position along the vertical track and is docked with a corresponding temporary storage position, the minimum height from the lower part of the fork mechanism to the ground is higher than the transfer vehicle in the no-load state, that is, in the operation process of the whole storage logistics system, the transfer vehicle in the no-load state will not interfere with other components in the whole system and can move freely on the ground site (a plane of a warehouse). It should be noted here that when the fork mechanism 201 is docked with the temporary storage position, it may be the lowest position of a vertical guide rail, that is, the docking position is the end of a stroke of the fork mechanism 201 on the vertical guide rail. However, in practice, a certain of residual stroke may be reserved, that is, in the normal operation process, the fork mechanism 201 is designated to take the docking position of the temporary storage position as the lowest position through system control; however, under special circumstances, such as maintenance or loading and unloading, the fork mechanism 201 will be lowered to a position lower than the temporary storage position.

In some embodiments, as shown in FIG. 9, the traveling mechanism 202 includes two rollers 2021 respectively mounted on the two vertical tracks TR2, and the rollers 2021 are located at the intersection position of the vertical tracks TR2 and the horizontal beam and can roll on a top surface of the horizontal beam intersecting with the vertical tracks TR2 along the horizontal direction. At least one of the two rollers 2021 is a driving wheel, the driving wheel 2021 is in rotary driving connection with a motor 203, and the driving wheel 2021 can drive a power supply apparatus of the two vertical tracks TR2 to move horizontally along the top surface of the horizontal beam. Optionally, two rollers 2021 are driving wheels, or a driving wheel and a driven wheel.

In some embodiments, as shown in FIG. 9, the traveling mechanism 202 includes a guide apparatus 2022 connected to at least one vertical track TR2 and configured to guide the two vertical tracks TR2 to move horizontally along the horizontal beam. Optionally, the guide apparatus 2022 includes a guide wheel 2023, the guide wheel 2023 can roll along at least one side surface of the horizontal beam, and the side surface of the horizontal beam intersects with the top surface.

In some embodiments, as shown in FIG. 9, the articles access mechanism 200 includes a power supply apparatus 204, and the power supply apparatus 204 may be a battery for supplying power to the motor.

In some embodiments, as shown in FIG. 9, the fork mechanism 201 includes a bracket 60 located at the bottom, the bracket 60 is provided with an access assembly 50, the access assembly 50 is configured to transfer articles between one of the storage position and the temporary storage position and the fork mechanism, and the fork mechanism 201 can make a transmission surface of the access assembly 50 basically flush with each storage position and the temporary storage position. The bracket 60 includes a bending part, the bending part includes a vertical part and a horizontal part which are connected, the vertical part is movably connected to the vertical track, and the horizontal part is lower than the vertical part.

The access assembly 50 is a mechanism for directly taking and placing articles, and may adopt a hooking type pick-up assembly, a fork-clamping type pick-up assembly or a lifting type pick-up assembly, which is not specifically limited in this patent.

In addition, in some embodiments, as shown in FIG. 2, articles access mechanisms 200 may be arranged on the surfaces of the shelves on two sides of the same laneway; at this time, the articles access mechanisms 200 are mounted on the shelves, and the access assembly 50 is movably mounted on the bracket 60, so that the access assembly 50 can move along a direction perpendicular to the side surface of the laneway or the shelf relative to the bracket 60; therefore, on one hand, the two fork mechanisms 201 in the same laneway adjust the position of the access assembly 50 during horizontal movement, and on the other hand, the distance between the access assembly 50 and the storage position, the temporary storage position or the transfer vehicle in the access process can be adjusted to facilitate access, thereby improving the access stability.

In some embodiments, as shown in FIG. 10, the articles access mechanism 200 includes a current collector 205, a sliding contact line 206 is arranged in the horizontal beam, the sliding contact line 206 is electrically connected to a power supply, and when the current collector 205 is slidingly and electrically connected to the sliding contact line 206, the battery 204 is charged. Optionally, a sliding contact line 206 is locally arranged in a U-shaped groove of the horizontal beam. Optionally, the cross section of the horizontal beam is an inverted U-shaped groove, a sliding contact line 206 is arranged at a local area of the inverted U groove, and a contact end of the sliding contact line 206 is downward and can be docked with a terminal of the upward current collector 205. When the current collector 205 is not in contact with the sliding contact line 206 in the horizontal beam, the battery 204 supplies power to the motor 203; and when the current collector 205 is in contact with the sliding contact line 206 in the horizontal beam, the current collector 205 charges the battery 204.

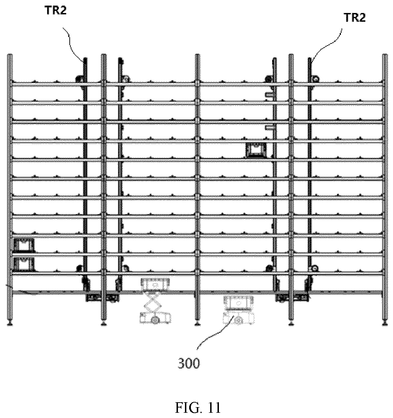

In some embodiments, as shown in FIG. 11, the bottom end of the vertical track TR2 is higher than the transfer vehicle 300 in the articles loading state, and the fork mechanism 201 is adjusted not to be lower than the transfer vehicle 300 in the articles loading state, so that the transfer vehicle 300 in the articles loading state can travel in the basic whole ground range of the storage logistics system, and the fork mechanism 201 is configured to have a sunken structure; and when the fork mechanism 201 moves to the bottom end of the vertical track TR2, the bottom end of the fork mechanism 201 is lower than the bottom end of the vertical track TR2, thereby ensuring that the articles at the bottom end of the fork mechanism 201 basically flushes with the plane of the temporary storage position and ensuring that the bottom end of the vertical track TR2 is higher than the bottom end of the fork mechanism 201. Meanwhile, since the fork mechanism 201 is configured to have the sunken structure, to ensure that the articles at the bottom end of the fork mechanism 201 basically flushes with the uppermost layer of storage position, the top end of the vertical track TR2 is higher than the uppermost layer of storage position. In addition, the fork mechanism 201 can make the articles at the bottom end of the fork mechanism 201 basically flush with the each storage position and the temporary storage position, so that the articles can be conveyed between the fork mechanism 201 and the storage position and the temporary storage position.

In some embodiments, the fork mechanism 201 is docked with the temporary storage position located below the shelf 100 to convey articles. At this time, a space for continuous downward movement may be present at the lowest position in the working state of the fork mechanism 201, but under the normal operation of the system, the fork mechanism 201 only can operate at the position and the area above theoretically. At this time, the lower part of the fork mechanism 201 is higher than the transfer vehicle 300 in the no-load state. Meanwhile, the height of the temporary storage position is greater than that of the transfer vehicle 300 in the articles loading state. To ensure that the transfer vehicle 300 is not disturbed by the vertical track TR2, in this embodiment, the bottom end of the vertical track TR2 is not less than that of the temporary storage position, as shown in FIG. 4 and FIG. 11, the height of the bottom end of the vertical track TR2 may be defined to flush with a plane below the temporary storage mechanism, so that when the height of the temporary storage position is greater than that of the transfer vehicle 300 in the articles loading state, it can be stably ensured that the height of the bottom end of the vertical track TR2 will not block the transfer vehicle 300, that is, the transfer vehicle 300 will not be hindered in both the articles loading state and the non-articles loading state, no matter the transfer vehicle transversely crosses or crosses along the shelf extending direction.

In some embodiments, as shown in FIG. 1, the storage logistics system further include a work station 500, the work station 500 is a station for articles sorting, an operator or a mechanical arm can wait for the transfer vehicle 300 at the station to sort the articles thereon, and the transfer vehicle 300 is configured to convey the articles to the work station 500 or convey the articles from the work station 500.

Although some specific embodiments of the present disclosure have been illustrated in detail through the examples, those skilled in the art should understand that the above examples are merely for illustration, but not intended to limit the scope of the present disclosure. Those skilled in the art should understand that the above embodiments may be modified or part of technical features may be equivalently replaced without departing from the scope and spirit of the present disclosure. The scope of the present disclosure is defined by the appended claims.

## Claims

1. A storage logistics system, comprising:
a shelf (100), comprising a horizontal beam and a vertical beam and provided with multiple rows of storage positions for placing articles (600);
a articles access mechanism (200), movably arranged relative to the shelf (100) to take articles (600) from a specified storage position and place the articles (600) to a specified storage position; and
a transfer vehicle (300), configured to transport articles (600) on the site of the storage logistics system.

2. The storage logistics system according to claim 1, wherein the articles access mechanism (200) is movably arranged relative to the shelf (100) in a bottom hanging manner;optionally, the articles access mechanism (200) is arranged on the shelf (100).

3. The storage logistics system according to claim 1 or 2, comprising a articles temporary storage mechanism (400) provided with a temporary storage position, the temporary storage position is configured to temporarily store articles (600) from the transfer vehicle (300) and the articles access mechanism (200), the articles temporary storage mechanism (400) is arranged below a storage position located at the lowest row and higher than the transfer vehicle (300) in a articles loading state, a low-level channel is formed between the articles temporary storage mechanism and the ground of the storage logistics system, and the low-level channel is higher than the transfer vehicle (300) in a articles transportation state, so that the transfer vehicle (300) carrying the articles (600) is able to pass under the articles temporary storage mechanism (400).

4. The storage logistics system according to any one of claims 1-3, wherein the articles access mechanism (200) is configured to: when the articles access mechanism (200) is docked with a specified position located below the lowest storage position of the shelf (100), the minimum height of the bottom of the articles access mechanism (200) is greater than the transfer vehicle (300) in a no-load state, so that the transfer vehicle (300) in the no-load state is able to pass under the articles access mechanism (200).

5. The storage logistics system according to any one of claims 1-3, wherein the articles access mechanism (200) comprises a vertical track (TR2), and the vertical track (TR2) is moveable in a horizontal direction relative to the shelf (100), where a bottom end of the vertical track is higher than the transfer vehicle (300) in a articles loading state, so that the transfer vehicle (300) in the articles loading state is able to pass under the bottom end of the vertical track;optionally, the vertical track is vertically arranged on one side of the shelf (100); and
the articles access mechanism (200) comprises a fork mechanism (201), and the fork mechanism (201) is movably arranged on the vertical track in a vertical direction so as to move to a specified storage position to take and place articles (600);
optionally, a top end of the vertical track (TR2) is higher than the highest layer of storage position;
optionally, a bottom end of the vertical track (TR2) is higher than the temporary storage position.

6. The storage logistics system according to claim 5, wherein the bottom of the fork mechanism (201) is configured to: when the fork mechanism (201) moves downwards to a docking position along the vertical track, the minimum height from the bottom of the fork mechanism (201) to the ground is greater than the transfer vehicle in a no-load state, where the docking position is a position when the fork mechanism is docked with the specified position below the lowest storage position of the shelf (100);
optionally, a specified position is a position where the temporary storage position below the shelf is located, and the fork mechanism is docked with the temporary storage position at the docking position for transferring articles.

7. The storage logistics system according to claim 5 or 6, wherein the bottom of the fork mechanism (201) is configured to be located at the lowest position of the bottom of the articles access mechanism (200) when the fork mechanism (201) moves to the bottom end of the vertical track.

8. The storage logistics system according to claim 6, wherein the fork mechanism comprises a bracket (60) located at the bottom, the bracket (60) comprises a bending part, the bending part comprises a vertical part and a horizontal part which are connected, the vertical part is movably connected to the vertical track, and the horizontal part is lower than the vertical part;
optionally, the storage logistics system comprising a guide wheel (2022) connected to the vertical track, the guide wheel (2022) is arranged on at least one side surface of the horizontal beam, and the side surface intersects a top surface of the horizontal beam;
optionally, an access assembly (50) is arranged on the bracket (60) for transferring articles (600) between one of the storage position and the temporary storage position and the fork mechanism, and the fork mechanism (201) is configured to make a transmission surface of the access assembly (50) substantially flush with each storage position and the temporary storage position.

9. The storage logistics system according to claim 5, wherein the articles access mechanism (200) comprises a traveling mechanism (202) for driving the vertical track to move horizontally.

10. The storage logistics system according to claim 9, wherein the traveling mechanism (202) drives the vertical track (TR2) to horizontally move along the horizontal beam and/or the fork mechanism (201) to move along the vertical track;
optionally, the traveling mechanism (202) comprises:
a sliding contact line (206), locally arranged in a groove of the horizontal beam; and
a motor (203), being electrically connected to the sliding contact line (206) through a current collector (205);
optionally, the traveling mechanism (202) comprises a driving wheel (2021) connected to the vertical track (TR2), and the driving wheel (2021) is arranged on a top surface of the horizontal beam and connected to a motor (203) in a driving manner;
optionally, the traveling mechanism (202) comprises a battery (204) electrically connected to a sliding contact line (206).

11. The storage logistics system according to claim 1 or 2, comprising a articles temporary storage mechanism (400) provided with a temporary storage position, the temporary storage position is configured to temporarily store articles from the transfer vehicle (300) and the articles access mechanism (200), and the articles temporary storage mechanism (400) is arranged below a storage position located at the lowest row.

12. The storage logistics system according to claim 3 or 11, wherein the articles temporary storage mechanism (400) comprises a plurality of supporting pieces (82) arranged at intervals in a horizontal direction, the temporary storage position comprises two adjacent supporting pieces (82), the two adjacent supporting pieces (82) form the temporary storage position, and the two supporting pieces (82) are configured as one of the following:
one end of each of the two supporting pieces (82) is connected mutually to form a closed port; the other ends of the two supporting pieces are free to form an open port; and
the two ends of the two supporting pieces (82) are free, and two open ports are formed at the two ends respectively.

13. The storage logistics system according to claim 12, wherein the two supporting pieces (82) are configured as one of the following:
one end of each of the two supporting pieces (82) is connected to a supporting beam (81), the supporting beam (81) is fixed on the shelf (100), the other ends of the two supporting pieces (82) are free to form a single-opening channel between the two supporting pieces (82); and
the two supporting pieces (82) are connected to the lowest layer of storage position of the shelf (100) in a suspended manner between two ends or are connected to the ground of the storage logistics system in a supported manner between two ends. The two ends of the two supporting pieces (82) are free to form a double-opening channel between the two supporting pieces (82).

14. The storage logistics system according to claim 2, comprising at least two rows of spaced shelves (100), a laneway is formed between two adjacent rows of shelves(100), the articles access mechanism (200) is configured to move in the laneway, a laneway channel is formed between the bottom of the articles access mechanism (200) and the ground of the storage logistics system, and the minimum height of the laneway channel is greater than the transfer vehicle (300) in a no-load state.

15. The storage logistics system according to any one of claims 1-14, wherein the transfer vehicle (300) has an articles lifting function, a high-level channel is formed between the lowest row of storage position and the ground of the storage logistics system, and the high-level channel is higher than the transfer vehicle (300) in a articles lifting state.

## Amended claims

### Amended claims in accordance with Rule 137(2) EPC.

1. A storage logistics system, comprising:
a shelf (100), comprising a horizontal beam and a vertical beam and provided with multiple rows of storage positions for placing articles (600);
a articles access mechanism (200), movably arranged relative to the shelf (100) to take articles (600) from a specified storage position and place the articles (600) to a specified storage position;
a transfer vehicle (300), configured to transport articles (600) on the site of the storage logistics system, **characterized in that** the transfer vehicle (300) has a articles lifting function, a high-level channel is formed between the lowest row of storage position and the ground of the storage logistics system, and the high-level channel is higher than the transfer vehicle (300) in a articles lifting state; and
a articles temporary storage mechanism (400) provided with a temporary storage position, the temporary storage position is configured to temporarily store articles (600) from the transfer vehicle (300) and the articles access mechanism (200), the articles temporary storage mechanism (400) is arranged below the lowest row of the storage position and higher than the transfer vehicle (300) in a articles loading state of the vehicle in which the vehicle (300) carries the articles (600) but does not lift the articles (600), a low-level channel is formed between the articles temporary storage mechanism and the ground of the storage logistics system, and the low-level channel is higher than the transfer vehicle (300) in a articles transportation state, so that the transfer vehicle (300) carrying the articles (600) is able to pass under the articles temporary storage mechanism (400).

2. The storage logistics system according to claim 1, wherein the articles access mechanism (200) is movably arranged relative to the shelf (100) in a bottom hanging manner;optionally, the articles access mechanism (200) is arranged on the shelf (100).

3. The storage logistics system according to claim 1or 2, wherein the articles access mechanism (200) is configured to: when the articles access mechanism (200) is docked with a specified position located below the lowest storage position of the shelf (100), the minimum height of the bottom of the articles access mechanism (200) is greater than the transfer vehicle (300) in a no-load state, so that the transfer vehicle (300) in the no-load state is able to pass under the articles access mechanism (200).

4. The storage logistics system according to claim 1 or 2, wherein the articles access mechanism (200) comprises a vertical track (TR2), and the vertical track (TR2) is moveable in a horizontal direction relative to the shelf (100), where a bottom end of the vertical track is higher than the transfer vehicle (300) in a articles loading state, so that the transfer vehicle (300) in the articles loading state is able to pass under the bottom end of the vertical track;optionally, the vertical track is vertically arranged on one side of the shelf (100); and
the articles access mechanism (200) comprises a fork mechanism (201), and the fork mechanism (201) is movably arranged on the vertical track in a vertical direction so as to move to a specified storage position to take and place articles (600);
optionally, a top end of the vertical track (TR2) is higher than the highest layer of storage position;
optionally, a bottom end of the vertical track (TR2) is higher than the temporary storage position.

5. The storage logistics system according to claim 4, wherein the bottom of the fork mechanism (201) is configured to: when the fork mechanism (201) moves downwards to a docking position along the vertical track, the minimum height from the bottom of the fork mechanism (201) to the ground is greater than the transfer vehicle in a no-load state, where the docking position is a position when the fork mechanism is docked with the specified position below the lowest storage position of the shelf (100);
optionally, a specified position is a position where the temporary storage position below the shelf is located, and the fork mechanism is docked with the temporary storage position at the docking position for transferring articles.

6. The storage logistics system according to claim 4 or 5, wherein the bottom of the fork mechanism (201) is configured to be located at the lowest position of the bottom of the articles access mechanism (200) when the fork mechanism (201) moves to the bottom end of the vertical track.

7. The storage logistics system according to claim 5, wherein the fork mechanism comprises a bracket (60) located at the bottom, the bracket (60) comprises a bending part, the bending part comprises a vertical part and a horizontal part which are connected, the vertical part is movably connected to the vertical track, and the horizontal part is lower than the vertical part;
optionally, the storage logistics system comprising a guide wheel (2022) connected to the vertical track, the guide wheel (2022) is arranged on at least one side surface of the horizontal beam, and the side surface intersects a top surface of the horizontal beam;
optionally, an access assembly (50) is arranged on the bracket (60) for transferring articles (600) between one of the storage position and the temporary storage position and the fork mechanism, and the fork mechanism (201) is configured to make a transmission surface of the access assembly (50) substantially flush with each storage position and the temporary storage position.

8. The storage logistics system according to claim 4, wherein the articles access mechanism (200) comprises a traveling mechanism (202) for driving the vertical track to move horizontally.

9. The storage logistics system according to claim 8, wherein the traveling mechanism (202) drives the vertical track (TR2) to horizontally move along the horizontal beam and/or the fork mechanism (201) to move along the vertical track;
optionally, the traveling mechanism (202) comprises:
a sliding contact line (206), locally arranged in a groove of the horizontal beam; and
a motor (203), being electrically connected to the sliding contact line (206) through a current collector (205);
optionally, the traveling mechanism (202) comprises a driving wheel (2021) connected to the vertical track (TR2), and the driving wheel (2021) is arranged on a top surface of the horizontal beam and connected to a motor (203) in a driving manner;
optionally, the traveling mechanism (202) comprises a battery (204) electrically connected to a sliding contact line (206).

10. The storage logistics system according to claim 1 or 2, comprising a articles temporary storage mechanism (400) provided with a temporary storage position, the temporary storage position is configured to temporarily store articles from the transfer vehicle (300) and the articles access mechanism (200), and the articles temporary storage mechanism (400) is arranged below a storage position located at the lowest row.

11. The storage logistics system according to claim 3 or 10, wherein the articles temporary storage mechanism (400) comprises a plurality of supporting pieces (82) arranged at intervals in a horizontal direction, the temporary storage position comprises two adjacent supporting pieces (82), the two adjacent supporting pieces (82) form the temporary storage position, and the two supporting pieces (82) are configured as one of the following:
one end of each of the two supporting pieces (82) is connected mutually to form a closed port; the other ends of the two supporting pieces are free to form an open port; and
the two ends of the two supporting pieces (82) are free, and two open ports are formed at the two ends respectively.

12. The storage logistics system according to claim 11, wherein the two supporting pieces (82) are configured as one of the following:
one end of each of the two supporting pieces (82) is connected to a supporting beam (81), the supporting beam (81) is fixed on the shelf (100), the other ends of the two supporting pieces (82) are free to form a single-opening channel between the two supporting pieces (82); and
the two supporting pieces (82) are connected to the lowest layer of storage position of the shelf (100) in a suspended manner between two ends or are connected to the ground of the storage logistics system in a supported manner between two ends. The two ends of the two supporting pieces (82) are free to form a double-opening channel between the two supporting pieces (82).

13. The storage logistics system according to claim 2, comprising at least two rows of spaced shelves (100), a laneway is formed between two adjacent rows of shelves(100), the articles access mechanism (200) is configured to move in the laneway, a laneway channel is formed between the bottom of the articles access mechanism (200) and the ground of the storage logistics system, and the minimum height of the laneway channel is greater than the transfer vehicle (300) in a no-load state.
